Europäisches Patentamt

European Patent Office

Office européen des brevets

(19)

(11) Veröffentlichungsnummer : **0 007 464**
**B1**

(12) **EUROPÄISCHE PATENTSCHRIFT**

(45) Veröffentlichungstag der Patentschrift :
17.03.82

(21) Anmeldenummer : **79102200.7**

(22) Anmeldetag : **30.06.79**

(51) Int. Cl.³ : **F 27 B 9/20, B 65 G 25/02,
F 27 B 9/30**

(54) **Hubplattenofen.**

(30) Priorität : **15.07.78 DE 2831251**

(43) Veröffentlichungstag der Anmeldung :
**06.02.80 (Patentblatt 80/03)**

(45) Bekanntmachung des Hinweises auf die Patenterteilung : **17.03.82 Patentblatt 82/11**

(84) Benannte Vertragsstaaten :
**AT BE CH FR GB IT NL SE**

(56) Entgegenhaltungen :
**FR - A - 1 324 683
US - A - 1 924 218
US - A - 3 633 885
US - A - 3 792 965**

(73) Patentinhaber : **SMIT OVENS NIJMEGEN B.V.
Groenestraat 265
Nijmegen (NL)**

(72) Erfinder : **Wiersma, Tjeerd G. c/o Smit Ovens Nijmegen B.V.
Groenestraat 265
Nijmegen (NL)**

(74) Vertreter : **Schulze Horn, Stefan, Dipl.-Ing. et al
Goldstrasse 36
D-4400 Münster (DE)**

Imprimerie Jouve, 18, rue St-Denis, 75001 Paris, France

## Hubplattenofen

Die Erfindung betrifft einen Ofen mit einem Ofenkanal, durch dessen Boden Stempel einer Transportvorrichtung hindurchragen, die in Kanalrichtung eine hin- und hergehende Bewegung und eine Hubbewegung durchführen, wobei die Bewegung der Stempel das Anheben und den schrittweisen Transport und das Wiederabsetzen von Brenngut-Chargen, vorzugsweise Tragplatten, bewirkt.

Ein Ofen der genannten Gattung ist aus der US-A-1 924 218 bekannt. Bei dem bekannten Ofen ragen die Stempel durch einen sich über die gesamte Länge des Ofens erstreckenden Schlitz. Sie weisen eine Abdichtung auf, welche die Form einer sich mit den Stempeln in Längsrichtung des Ofens mitbewegenden Abdeckplatte besitzt, die eine Abdichtung des Ofens und damit Wärmeverluste durch Gasaustausch verhindern soll. Dadurch jedoch, daß diese Abdichtungsplatte die Bewegung der Stempel mitmacht, wodurch der Schlitz taktweise auf- und abgedeckt wird, führt eine solche Bewegung der Abdichtung zu einem unerwünscht starken Luftaustausch zwischen Ofenbereich und Atmosphäre, da bei jedem Hub der Abdichtungsplatte eine intermittierende Absaugung von Ofengas erfolgt. Dabei treten Turbulenzen auf, die die gesamte Ofenatmosphäre, d.h. deren Gaszusammensetzung und Temperaturgradienten, so stark in Mitleidenschaft ziehen können, daß nachteilige Wirkungen auf den Brennprozeß des Brenngutes nicht auszuschließen sind. Dabei können auch Staubpartikel aufgewirbelt werden, die sich anschließend auf das Brenngut absetzen und ebenfalls den Brennprozeß oder die Oberflächenqualität des Brenngutes ungünstig beeinflussen.

Gegenüber diesem Stand der Technik stellt sich die technische Aufgabe, bei einem Ofen der eingangs genannten Gattung, bei dem durch den Boden eines Ofenkanales Stempel einer Transportvorrichtung hindurchragen, die durch ihre hin- und hergehende Bewegung den schrittweisen Transport von Brenngut-Chargen bewirken, eine solche verbesserte Ausgestaltung dieser Transporteinrichtung zur Verfügung zu stellen, daß bei praktisch berührungsfreier Durchführung der Stempel durch den Ofenboden bei möglichst geringem Abstand zwischen Stempel und Durchführung die von der Abdichtung hervorgerufene Gasbewegung innerhalb des Ofenraumes so gering wie möglich gehalten wird. Weiterhin soll die verbesserte Transporteinrichtung unter weitgehender Vermeidung von Verschleiß und Geräusch, betriebssicher und unkompliziert arbeiten.

Die Aufgabe wird dadurch gelöst, daß im Boden des Ofenkanales von den Stempeln durchgriffene Schächte angeordnet sind, deren Abmessungen gerade die Bewegung des Stempels ermöglichen, wobei die Schächte eine sich stufenweise nach unten verengende lichte Weite und die Stempel im Inneren der Schächte eine entsprechend abgestufte Außenabmessung haben.

Ersichtlicherweise wird mit der Erfindung infolge der besonderen Zuordnung von Stempel, Schächten sowie deren aufeinander abgestimmte Gestaltung und Bemessung eine gegenüber der bekannten Vorrichtung wesentlich verbesserte Abdichtungswirkung erzielt, die insbesondere nachteilige Wirkungen unkontrollierter Gasbewegungen auf das Brenngut vermeidet.

Die Aufgabe kann analog auch mit einem Ofen gelöst werden, der ebenfalls mit einem Ofenkanal ausgerüstet ist, durch dessen Boden Stempel einer Transportvorrichtung hindurchragen, die in Kanalrichtung eine hin- und hergehende Bewegung und eine Hubbewegung durchführen, wobei die Bewegung der Stempel das Anheben und den schrittweisen Transport und das Wiederabsetzen von Brenngut-Chargen, vorzugsweise Tragplatten bewirt, wobei in dem Boden des Ofenkanals von den Stempeln durchgriffene Schächte angeordnet sind, deren Abmessungen gerade die Bewegung des Stempels ermöglichen, wobei die Stempel mit wenigstens teilweise um die Außenseite der Stempel umlaufenden Kragen und die Schächte mit um die Innenseite der Schächte laufenden Nasenstegen, die gegenüber dem Kragen in Vertikalrichtung versetzt und in Horizontalrichtung überlappend angeordnet sind, ausgestattet sind.

Es ist ersichtlich, daß durch diese Ausgestaltung ebenfalls eine gute Abdichtungswirkung im Sinne der Aufgabenstellung erreicht wird.

Der Zusammenbau des Ofenkanals und die Einhaltung der Arbeitsbedingungen wird erleichtert, wenn wenigstens ein Teil der Nasenstege an der Innenseite von in die Schächte einzubringenden Schalsteinen angebracht ist.

Weitere zweckmäßige und/oder vorzugsweise Ausgestaltungen des Erfindungsgegenstandes ergeben sich aus den Merkmalen der Ansprüche 4 bis 8, die in der nachfolgenden Beschreibung anhand der Zeichnung erläutert und gewürdigt werden.

Die einzelnen Figuren zeigen:

Figur 1    einen Längsschnitt durch einen Teil des Hubplattenofens;

Figur 2    einen Querschnitt;

Figur 3    ein Detail des Antriebes;

Figur 4    einen Antrieb (Detail) in anderer Ausführungsform;

Figuren 5a/b/c/d schematisch einen Bewegungsablauf bei der Förderung des Brenngutes;

Figur 6    die Durchführung einer Hubstange in anderer Ausführungsform;

Figur 7    eine Schnittansicht gemäß Linie VII ... VII

Figur 8    einen Schnitt durch die Brennkammer bei einer geänderten Ausführungsform.

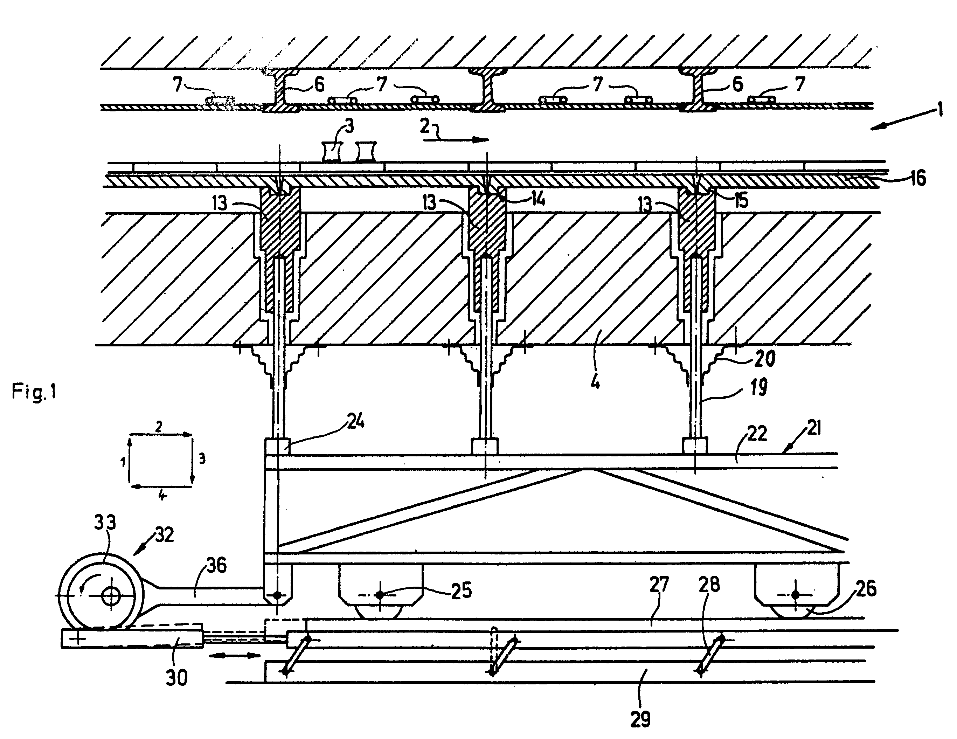

In der Figur 1 ist ein Hubplattenofen im Längsschnitt dargestellt, der gemäß Erfindung mit einer schrittweisen Vorwärtsbewegung des Brenngutes arbeitet. Der Ofenkanal 1 des Ofens, welcher im Querschnitt etwa rechteckig ist, wird in Transportrichtung (Pfeil 2) vom Brenngut 3 durchfahren. Das Ofeninnere kann über seine Länge in verschiedene Abschnitte oder Kammern unterteilt sein, die eine Aufteilung des Ofens in verschiedene Heizzonen ergeben oder in denen verschiedene Atmosphären durch unterschiedliche Gasbeschickung herstellbar sind.

Der Ofenkanal 1 wird an allen vier Seiten von einer Ausmauerung begrenzt, die aus hochtemperaturfester Keramik besteht, beispielsweise aus $Al_2O_3$-$SiO_2$-Gemischen, an sich bekannter Art. Die Kammer ist weiterhin mit Steinwolleeinlagen isoliert und durch ein Gehäuse eingefaßt.

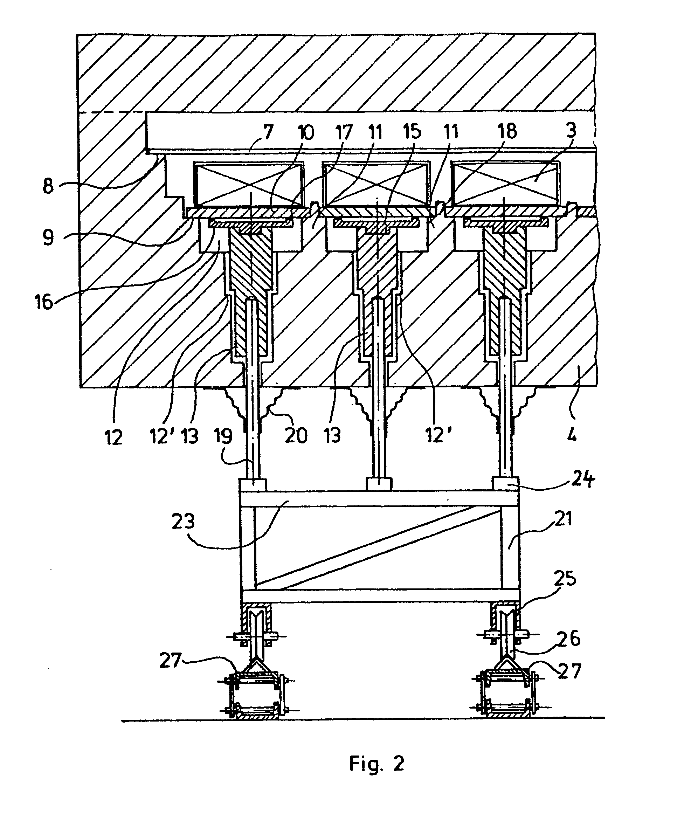

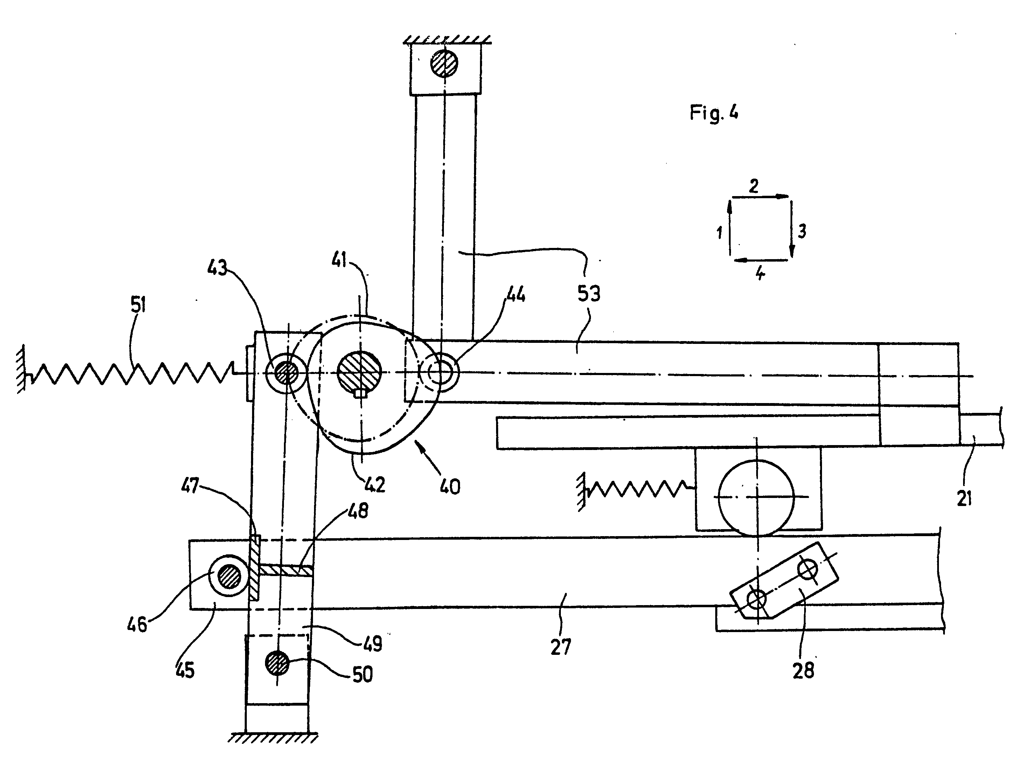

Die Decke 5 der Brennkammer 1 wird von Querträgern 6 getragen, zwischen die Heizelemente 7 auf Platten aufgelegt sind. Die Seitenwände (vgl. Figur 2) des Ofenraumes weisen stufenförmig ausgebildete Schultern 8, 9 auf. Die mit 9 bezeichnete Schulter stützt seitlich aufgelegte Tragplatten 10 ab, auf denen das Brenngut 3 steht. Weitere Stützen bilden die aus dem Boden 4 der Brennkammer herausgearbeiteten Stege 11, die so breit sind, daß sie als Auflage für von beiden Seiten aufgelegte Tragplatten dienen können.

Die Stege 11 und die Stufen 9 sind zur Achse des Heizraumes spiegelbildlich angeordnet. Die unterhalb der Tragplatten erkennbaren Hohlräume 12 bilden innerhalb des Bodens runde Löcher.

Wie in Figur 2 dargestellt, sind die Stege 11 weiterhin mit nach oben überstehenden seitlich abgeschrägten Führungsanschlagstegen 18 versehen, die eine seitliche Führung der Tragplatten 10 bewirken.

Die vorzugsweise rechteckigen Tragplatten 10, beispielsweise des Formates 300 × 150 mm bei einer Dicke von 10 mm, die sich untereinander zwar berühren, aber nicht fest miteinander verbunden sind, bilden eine im wesentlichen durchgehende Tragfläche. Die Platten bestehen vorzugsweise aus gesintertem SiC-Werkstoff mit einer Schutzschicht; es handelt sich also um sogenannte Sandwich-Platten. Diese Platten 10 werden schrittweise in Transportrichtung bewegt, wie weiter unten erläutert werden wird.

Der Boden 4 des Ofens ist mit sich nach unten stufenweise verengenden Schächten 12' versehen, in denen Stempel 13 auf- und abbewegbar angeordnet sind. Weiterhin liegt ein Teil des stirnseitigen Randes der Stützplatten 16 auf der Oberseite der Stempel auf. Die Länge der Stützplatten 16 entspricht demnach dem Abstand der Stempel 13. Die Stützplatten, welche vorzugsweise aus nitridgebundenen SiC-Gemischen bestehen, tragen die Tragplatten 10. Die Stützplatten sind ausgelegt auf hohe Wärmeleitfähigkeit und niedrige Wärmespannungen.

Die Zungen 15 sitzen jeweils an der Stirnseite der Stützplatten 10 ; ihre Breite beträgt etwa ein Viertel der Breite der Stützplatten. Die Stützplatten besitzen jeweils etwa die zweieinhalbfache Länge der Tragplatten 10, welche auf den Stützplatten aufliegen und einen im wesentlichen geschlossenen Belag bilden. Die in die Vertiefung 14 eingelegten Plattenzungen 15 können sich bei einer Auf- und Abbewegung der Stempel ausreichend frei bewegen, so daß auch unterschiedliche Stempelhöhen mit Schrägstellung der Stützplatten innerhalb gewissern Grenzen möglich sind.

Wie aus der Figur 2 zu erkennen ist, ist die Breite der Stützplatten 16 etwas kleiner als die Breite der Tragplatten 10. Die Seitenränder 17 stehen nach oben über die Mittelfläche vor, so daß die Tragplatten von den Stützplatten nur im Bereiche der Ränder 17, die entsprechende Stege bilden, kontaktiert werden. Hierdurch wird bei Durchbiegung oder Wölbung der Stützplatten immer für einen ausreichenden Tragekontakt gesorgt. Die Zungen 15 ligen in der Plattenachse und nehmen etwa ein Viertel der Gesamtplattenbreite ein. Die Zungen 15 sind einheitlich aus dem Material der Stützplatten 16 angefertigt oder werden nachträglich mit dieser verbunden.

Die Stempel 13 werden getragen von Hubstangen 19, die aus Metallrohr bestehen und durch einen gasdichten, elastischen Balg 20 gehalten sind. Die Balge 20 bestehen aus einem konusförmigen Gummibelag aus temperaturfestem Silikonkautschuk und dichten die Hubstange nach Art einer Manschette gasdicht ab. Die Temperaturbeständigkeit ist dabei nicht kritisch, da sich die Teile nicht über 130 °C erhitzen, auch wenn im Ofenkanal eine Temperatur von 1 500 °C herrscht.

Nach unten enden die Hubstangen 19 auf einem Fahrgestell 21, das mit Längsstreben 22 in Richtung der Aufreihung der Hubstempel 13 in Ofenlängsrichtung und mit Querstreben 23 senkrecht dazu bestückt ist.

Über die mit einem Verstellgewinde ausgestatteten Fußteile 24 trägt das Gestell die Hubstangen 19. Mit Hilfe des Verstellgewindes kann eine Höhen-Feinjustierung der Hubstangen erfolgen.

Das Fahrgestell 21 ruht über Lager 25 auf zwei Räder-Paaren 26, die sich auf zwei auf- und abbewegbaren Hubschinen 27 abstützen. Die beweglichen, oberen Hubschienen 27 sind über an ihren Enden gelenkig verbundene Trägerlaschen 28 mit den unten angeordneten, ruhenden Tragschienen 29 verbunden. Über eine Kolben-Zylinder-Anordnung 30 ist die Hubschiene 27 in Ofenachsenrichtung verschiebbar, wobei sie gleichzeitig eine Höhenverstellung erfährt.

Eine synchrone, weitere Bewegung führt das Fahrgestell 21 mit Hilfe eines Exzentertriebes 32 durch. Über das exzentrisch gelagerte Rad 33, welches über eine Magnetkupplung 34 mit einem Kegelzahnradantrieb 35 abgetrieben wird, kann die Stange 36 hin- und herbewegt werden. Die Antriebswelle 37 des Zahntriebes hat beispielsweise eine Drehgeschwindigkeit von 7,5 Umdrehungen/min. Hierbei wird das Gestell 21 um eine bestimmte kleine Strecke bewegt. Durch Magnetkupplung 31 wird die Bewegung jeweils unterbrochen, wenn eine bestimmte Bewegungsphase erreicht ist. Durch die beschriebenen Bewegungselemente wird damit eine auf- und abgehende mit einer in Achsenrichtung hin- und hergehenden Bewegung des Stempels erzeugt.

In der Figur 4 ist ein Antrieb für die Vertikal- und Horizontalbewegung dargestellt, bei dem die Steuerung des Fahrgestelles 21 mit Hilfe eines Kurvengetriebes 40 erfolgt. Zwei Kurvenscheiben 41 und 42 sorgen für die horizontale bzw. vertikale Bewegung über mit Teilen des Gestelles 21 verbundenen Rollen 43, 44, die auf den Flanken der Kurvenscheiben abrollen (43 auf 42 bzw. 44 auf 41). Beide Kurvenscheiben sitzen auf derselben Welle. Die Form der Scheibenkurve wird nach den vorgeschriebenen Bewegungsgesetzen bestimmt. Die Hubschiene 27 ist an einem Ende 45 mit einer Rolle 46 versehen, die auf der Flachseite 47 eines Balkens 48 abrollt, der mit einem Hebelbaum 49 starr verbunden ist. Der Baum 49 ist bei 50 gelagert und wird durch die Zugfederanordnung 51 (im Bild) nach links gezogen. Die Federkraft der Federanordnung 51 kompensiert zum Teil das Gewicht der Hubplatten-Anordnung, die auf den Hubbalken 27 drückt, und ihn über die Trägerlasche 28 nach rechts zieht. Bei Drehung der Kurvenscheibe 42 schwenkt der Baum 49 nach links, so daß durch die Aufrechtstellung der Lasche 28 sich der Hubbalken hebt. Gleichzeitig drückt die Kurvenscheibe 41 das Fahrgestell 21 derartig, daß dieses sich nicht gleichzeitig nach links bewegen kann, sondern lediglich eine Vertikalbewegung ausführt. Die gelenkige, L-förmige Balkenanordnung 53 ist derart federbelastet, daß die definierte Stellung der Rolle 44 gegenüber der Welle der Kurvenscheibe 41 gewährleistet ist.

Am Ende der Hubbewegung wird durch Drehung der Kurvenscheibe 41 die Balkenanordnung 53 zusammen mit dem Fahrgestell z.B. um 15 mm nach rechts verschoben. Anschließend wirkt sich die Flankenform der Kurvenscheibe 42 wieder aus und sorgt für eine Absenkung des Hubbalkens 27 bei stillgelegter Horizontalbewegung. Im Tiefpunkt wird dann das Fahrgestell wieder nach links gezogen, wobei die Tragplatten 10 abgelegt sind.

Prinzipiell werden damit bei den Ausführungsformen gemäß Figuren 1 bzw. 4 die gleichen Bewegungen des Hubbalkens und der Stützplatten durchgeführt, wie dies auch in den beigefügten quadratischen Diagrammen mit den Bewegungsphasen 1 bis 4 dargestellt ist.

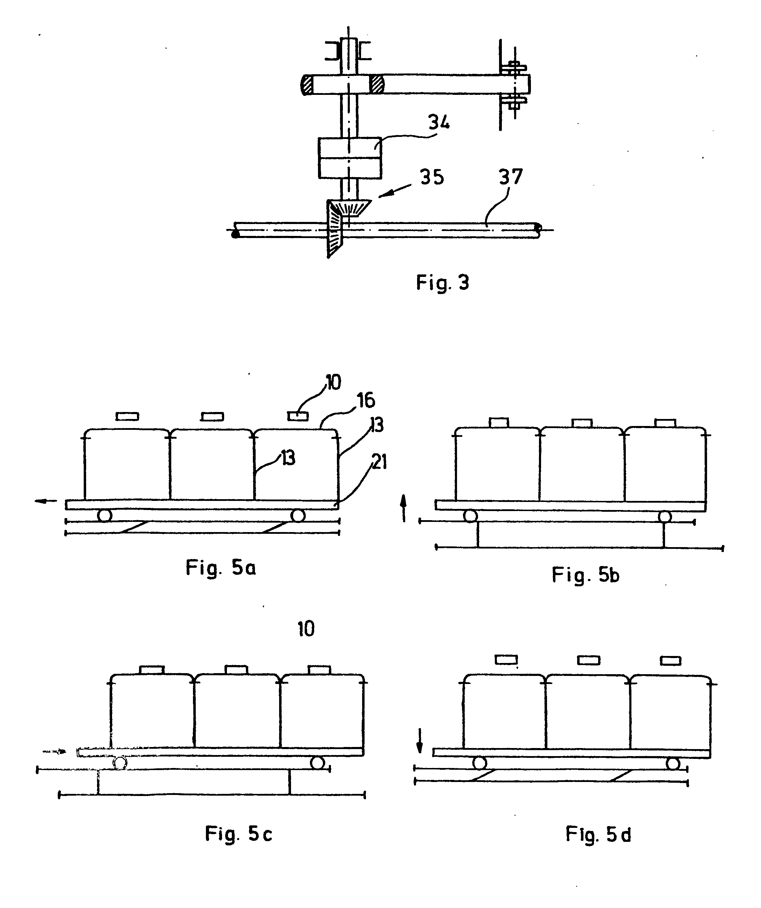

Um die Bewegungsfolge zu verdeutlichen, so ist dies nochmals anhand der Figuren 5a bis 5d beschrieben.

Figur 5a zeigt die tiefste Stellung der Stempel 13, d.h. bei abgelegten Tragplatten 10. In dieser Stellung wird das Fahrgestell 21 unter den Tragplatten 10 hindurchgezogen (Pfeil). Die Tragplatten 10 liegen auf den Schultern 9 bzw. Stegen 11 auf. Während dieser Phase, bei der kein Kontakt zwischen Stütz- und Tragplatten 16 bzw. 10 besteht, wird das Gestell gegen die Transportrichtung gezogen. Bei der nächsten Phase (Figur 5b) steigt die Hubschiene 27 wieder an und hebt über die Stützplatten die Tragplatten auf. Es erfolgt anschließend eine Förderbewegung (Figur 5c) in Transportrichtung, so daß die Platten 10 sich nach rechts bewegen. Durch die Abstimmung der Bewegungen verbleiben zwar die Stützplatten in ihrer relativen Anordnung zu den Stempeln, jedoch wandern die aufliegenden Tragplatten in Transportrichtung weiter. In Figur 5d senkt sich das Fahrgestell 21 wieder ab und gelangt in die tiefe Stellung, ähnlich wie bei Figur 5a, jedoch mit nach rechts verschobenem Fahrgestell.

Die Länge des Fahrgestells 21 kann sich über die gesamte Ofenlänge erstrecken, jedoch auch über die Länge unterteilt sein. Frei wählbar sind auch die Abstände der Stempel 13 bzw. der Hubstangen 19 in Längs- und Querrichtung. Es ist möglich, über die Breite des Ofens mehrere Reihen von Tragplatten vorzusehen. Als Arbeitstakt hat sich eine Taktfolge für die Hubbewegung, je nach Transportgeschwindigkeit, etwa von drei bis vier Hüben pro Min. bei einer Vorwärtsbewegung von 2,7 ... 3,6 m pro Stunde als günstig herausgestellt. Die Hubhöhe beträgt beispielsweise 15 mm ± 5 mm.

Neben einer Transportbewegung in Pfeilrichtung (2) ist auch — bei entsprechender Umschaltung und Synchronisierung der beweglichen Teile — eine Rückwärtsbewegung bzw. Umkehrung der Bewegungsrichtung möglich. Selbstverständlich ist möglich, die Transportgeschwindigkeit in weiten Bereichen zu variieren.

Durch die relativ kleinen Schächte, die gerade genug Spiel haben, um die Bewegung der Stempel zu ermöglichen, ist die Pumpwirkung gegenüber der Schutzgasatmosphäre äußerst gering, so daß Störungen der eingestellten Temperatur und des vorgesehenen Gases kaum möglich sind. Unterhalb der Tragplatten 10 sowie in dem Raum oberhalb der eigentlichen Brennkammer, können Heizelemente angeordnet sein, welche beispielsweise aus gebogenen Widerstandsdrähten bestehen, die auf Platten aufgelegt sind. Eine derartige Anordnung ist beispielsweise in der Deutschen Offenlegungsschrift 1 948 724 beschrieben. Durch die Beheizung von unten und oben und durch die wegen der mechanischen Erfordernisse nur geringe Dicke der Trag- und Stützplatten läßt sich eine sehr gleichmäßige Erwärmung aller Teile bei minimaler Wärmeverlusten ermöglichen, wobei die benötigte bzw. freigesetzte Akkumulationswärme bei Aufheizen und Abkühlen merkbar herabgesetzt ist.

Um die Wärmeverluste weiter herabzusetzen, wird in Abwandlung der Ausführungsform gemäß 1 eine andere Form für die Durchführung der Stempel durch den Boden 4 des Ofens gewählt. Mit dieser Anordnung soll erreicht werden :

— hoher Temperaturgradient vom Ofeninneren zur Außenseite

— rascher Aus- und Einbau der Stempel und Schächte

— minimaler Gasverbrauch

— störungsfreier Betrieb.

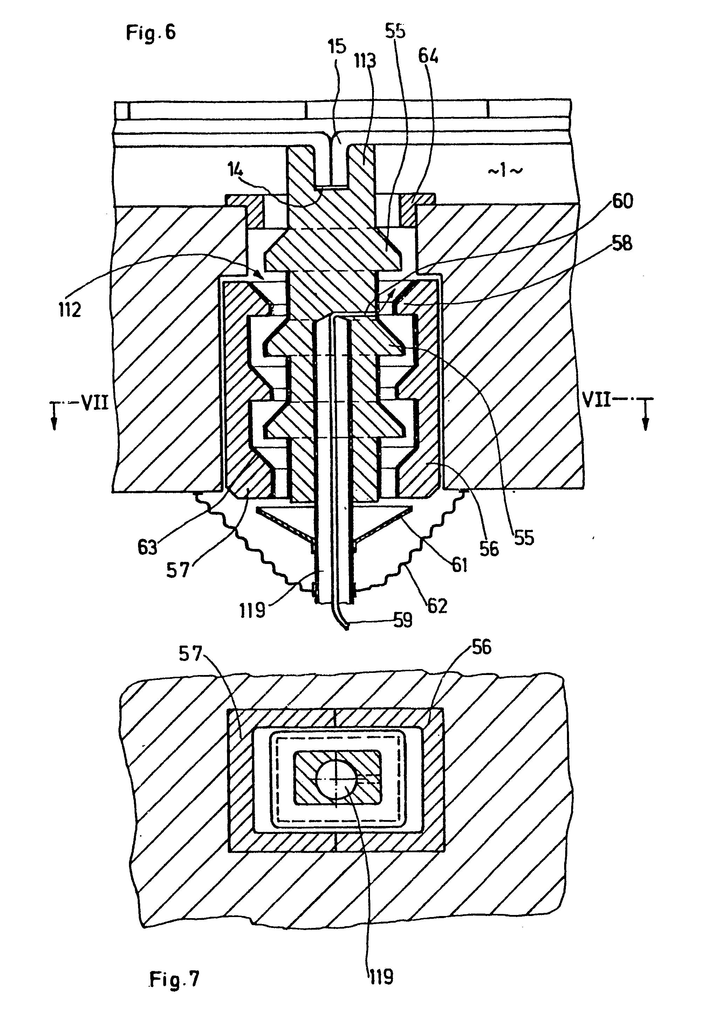

Im einzelnen wird der Aufbau der Stempeldurchführung anhand der Figuren 6 und 7 erläutert. Die Figur 6 zeigt eine ähnliche Ansicht wie bei Figur 1. Auf den Hubstangen 119 sitzende Stempel 113 sind als Aufrechtstehende Quader gestaltet, die mehrere (hier drei) übereinander angeordnete, rund um die Außenseite laufende Kragen 55 aufweisen, die im Querschnitt etwa Pulform haben, wobei die nach oben zeigende Seite nach außern abfallend abgeschrägt ist. Generell kann gesagt werden, daß der Erfindungsgedanke darin liegt, Stempel mit wenigstens teilweise um die Außenseite der Stempel umlaufende Kragen zu versehen, wobei die Anzahl der Kragen variieren kann, und diese Stempel in Schächten anzuordnen, die ebenfalls mit Vorsprüngen ausgestattet sind, die sich gegenseitig überlappen und dadurch die von innen nach außen dringende Wärmestrahlung abschirmen. Nach oben läuft der Stempel 113 in ein Kopfende aus, das eine Vertiefung 14 besitzt, in der die Zungen 15 der Stützplatten einrasten. Das Material der Stempel ist feuerfestes Silikat-Material an sich bekannter Art, wobei der Kopf und der fuß des Stempels 113 aus unterschiedlichen Materialien bestehen können. Die Stempel 113 vollziehen ihre auf- und ab- sowie in Transportrichtung hin- und hergehende Bewegung innerhalb von Schächten 112, um deren Innenseite Nasenstege 58 laufen, die gegenüber dem Kragen 55 in Vertikalrichtung versetzt angeordnet sind. Die Schächte haben im wesentlichen einen rechteckigen oder quadratischen Querschnitt (vgl. Figur 7), wobei die unteren zwei Drittel der Schachthöhe im Querschnitt erweitert sind. In diesem Teil des Schachtes ist eine aus zwei Schalsteinen 56, 57 bestehende Wandung eingesetzt, die die zum Inneren des Schachtes zeigenden Nasenstege 58 besitzen, die im Querschnitt ähnlich pultförmig gestaltet sind, wie die Kragen 55 der Stempel. Wie aus der Draufsicht gemäß Figur 7 erkennbar ist, überlappen sich die Vorsprünge 55 und 58 etwas. Das Spiel in Transportrichtung ist dabei wesentlich größer als in Querrichtung dazu, wie ebenfalls aus der Figur 7 erkennbar ist.

Die Innen- bzw. Außenseite sowie die Vorsprünge 55 und 58 sind ferner auf den Schrägen und auf den Flanken mit einer filzartigen Beschichtung 63 aus feuerfestem Fasermaterial versehen, die einerseits die Dichtigkeit erhöht. Überstehendes Material wird abgetragen, und das Spiel zwischen Stempel und Wand wird minimalisiert.

Weiterhin kann die Hubstange 119 hohl ausgeführt sein und damit an eine Gaseinführung bzw. -abführung über den Schlauch 59 angeschlossen werden, wobei über eine Bohrung 60 innerhalb der Stempel der Gasaustausch in dem Schacht 112 und der Ofenkammer 1 erfolgen kann.

Weiterhin ist an der Hubstange 119 unterhalb des Stempels 113 ein Fangtrichter 61 angebracht, der den Abrieb auffängt und gleichzeitig als Strahlungsschutz dient. Weiterhin ist ein Balg 62 vorgesehen, der für einen gasdichten, flexiblen Abschluß sorgt. Der Abschluß nach oben zur Ofenkammer 1 hin wird verengt durch einen auf den Rand des Schachtes aufgelegten Ringstein 64.

Die Funktion der in den Figuren 6, 7 dargestellten Stempeldurchführung liegt darin, daß bei Bewegung des Stempels in Transportrichtung praktisch immer eine Überlappung des Vorsprünge 55, 58 gewährleistet ist. Ferner wird die von oben eindringende Strahlung weitgehend reflektiert und gelangt nicht in den unteren Teil des Ofens. Tatsächlich haben Messungen ergeben, daß im oberen Bereich des Ofens eine Temperatur von 1 500 °C herrschen kann, während im Bereich des Balges 62 lediglich 130 °C gemessen werden.

Die Beschickung des Ofens erfolgt, indem jeweils mehrere nebeneinanderliegende Reihen von Tragplatten als eine Art Tafel über Transportwagen herangebracht werden und als Gesamtanordnung in den Ofen geschoben werden.

Nach Durchlauf können die Platten in der gleichen Art und Weise wieder abgenommen werden und das auf ihnen stehende Brenngut einer weiteren Verarbeitung zugeführt werden. Wegen der Möglichkeit, mehrere Reihen auf der erhöhten Breite unterzubringen und wegen der Möglichkeit, sowohl eine Heizung oberhalb als auch unterhalb der eigentlichen Brennkammer vorzunehmen, können die Öfen bei gleicher Kapazität und Durchlaufzeit erheblich in ihrer Länge verkürzt werden.

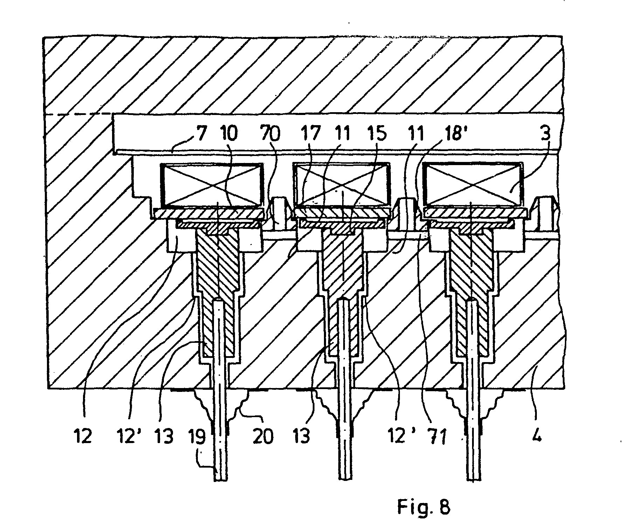

Figur 8 zeigt ein Detail mit anderen Führungsanschlagstegen 18' als im Zusammenhang mit Figur 2 beschrieben. Die Stege 18' sind von Bohrungen 70, 71 durchzogen, die einen Gasdurchlaß aus dem Raum unterhalb der Stützplatten 16 in den Raum oberhalb dieser Platten herstellen. Damit läßt sich die Gasatmosphäre besser homogenisieren. Die leicht abgeschrägten Führungsstege können für jede Tragplatten-Bahn vorhanden, aber auch nur an den Seiten angeordnet sein. Die Abschrägung ist wesentlich, um bei Hubbewegung der Tragplatten deren Ränder freizulegen. Bei Absetzen werden die Tragplattenwieder genau in ihre Bahn eingeführt.

**Ansprüche**

1. Ofen mit einem Ofenkanal, durch dessen Boden Stempel (13 ; 113) einer Transportvorrichtung hindurchragen, die in Kanalrichtung eine hin- und hergehende Bewegung und eine Hubbewegung durchführen, wobei die Bewegung der Stempel das Anheben und den schrittweisen Transport und das Wieder-absetzen von Brenngut-Chargen, vorzugsweise Tragplatten (10), bewirkt, dadurch gekennzeichnet, daß im Boden (4) des Ofenkanals (1) von den Stempeln (13) durchgriffene Schächte (12') angeordnet sind, deren Abmessungen gerade ' die Bewegung des Stempels ermöglichen, wobei die Schächte (12') eine sich stufenweise nach unten verengende lichte Weite und die Stempel im Inneren der Schächte eine entsprechend abgestufte Außenabmessung haben.

5

2. Ofen mit einem Ofenkanal, durch dessen Boden Stempel (113) einer Transportvorrichtung hindurchragen, die in Kanalrichtung eine hin- und hergehende Bewegung und eine Hubbewegung durchführen, wobei die Bewegung der Stempel das Anheben und den schrittweisen Transport und das Wiederabsetzen von Brenngut-Chargen, vorzugsweise Tragplatten (10) bewirkt, dadurch gekennzeichnet, daß in dem Boden (4) des Ofenkanals (1) von den Stempeln (113) durchgriffene Schächte (112) angeordnet sind, deren Abmessungen gerade die Bewegung des Stempels ermöglichen, wobei die Stempel mit wenigstens teilweise um die Außenseite der Stempel umlaufenden Kragen (55) und die Schächte mit um die Innenseite der Schächte laufenden Nasenstegen (58), die gegenüber den Kragen (55) in Vertikalrichtung versetzt und in Horizontalrichtung überlappend angeordnet sind, ausgestattet sind.

3. Ofen nach Anspruch 2, dadurch gekennzeichnet, daß wenigstens ein Teil der Nasenstege (58) an der Innenseite von in den Schächten (11) angeordneten Schalsteinen (56, 57) angebracht sind.

4. Ofen nach Anspruch 3, dadurch gekennzeichnet, daß ein Paar gleicher Schalsteine (56, 57) spiegelbildlich zueinander liegend in den Schacht (112) eingesetzt ist.

5. Ofen nach einem der vorhergehenden Ansprüche, dadurch gekennzeichnet, daß der Schacht (12' ; 112) im wesentlichen rechteckigen Querschnitt hat und daß die Stempel (13 ; 113) im wesentlichen quaderförmig gestaltet sind.

6. Ofen nach einem der vorhergehenden Ansprüche, dadurch gekennzeichnet, daß Teile der Schachtinnenseite und/oder des Stempels in seinem im Schacht liegenden Bereich mit einer filzartigen Beschichtung (63) versehen sind.

7. Ofen nach einem der vorhergehenden Ansprüche, dadurch gekennzeichnet, daß innerhalb eines Ofenkanals mehrere Reihen von Stempeln (13 ; 113) parallel zueinander angeordnet sind.

8. Ofen nach einem der vorhergehenden Ansprüche, dadurch gekennzeichnet, daß im Stempel eine Gasleitung (59) geführt ist, die innerhalb des Schachtes (112) mündet.

## Claims

1. A furnace with flue, through whose bottom rams (13 ; 113) of a transportation device are projecting, said rams performing of reciprocal movement in the direction of the flue and a vertical movement, said movements of the rams causing lifting and stepwise transport and replacing of the product charges, which are preferably bearing plates (10), characterized by that ducts (12') are positioned within the bottom (4) of the flue (1), said ducts being penetrated by the rams (13) and having dimensions for just permitting the movement of the associated ram, said ducts (12') having a gradually decreasing interior, and said rams inside the ducts having a correspondingly graduated size.

2. A furnace with flue through whose bottom rams (113) of a transportation device are projecting, said rams performing a reciprocal movement in the direction of the flue and a vertical movement, said movements of the rams causing lifting and stepwise transport and replacing of product charges which are preferably bearing plates (10) characterized by, that ducts (112) are positioned within the bottom of the flue (1) said ducts being penetrated by the rams (13) and having dimensions for just permitting the movement of the associated ram, said rams being equipped with a collar (55) extending at least partially around the outer surface of that ram, and said ducts having nose flanges (58) extending around the inner walls of said ducts, said nose flanges being vertically staggered relative to said collars and horizontally overlapping said collars.

3. Furnace according to claim 2, characterized by, that at least part of the nose flanges (58) are formed at the inner walls of lining bricks which are positioned inside the ducts (112).

4. Furnace according to claim 3, characterized by, that a pair of identical lining bricks (56, 57) are installed into said duct (112) in symmetrical relation to each other.

5. Furnace according to one of the preceding claims, characterized by, that the duct (12' ; 112) is of a substantially rectangular cross-section, and that said rams (13 ; 113) are of a substantially block-shaped configuration.

6. Furnace according to one of the preceding claims, characterized by, that portions of the inner side walls of the ducts and/or of the inner rams at its part lying within the duct are provided with a felt-like coating (63).

7. Furnace according to one of the preceding claims, characterized by, that in the interior of said flue several rows of rams (13 ; 113) are arranged parallel to each other.

8. Furnace according to one of the preceding claims, characterized by, that a gas conduit (59) is guided inside said ram, said gas conduit ending in the interior of the duct (112).

## Revendications

1. Four avec canal de four, le fond duquel étant traversé par les pistons d'un dispositif de transport effectuant dans la direction du canal un mouvement de va-et-vient et un mouvement de course, le mouvement des pistons produisant le soulèvement, le transport au pas et le déposement des charges de matériel à brûler, de préférence de plaques portantes (10), caractérisé en ce que, dans le fond (4) du canal de four (1) sont disposés des entonnoirs (12') dans lesquels pénètrent les pistons (13), ces entonnoirs étant de dimension à permettre tout juste le mouvement du piston, leur diamètre intérieur se rétrécissant graduellement vers le bas, les pistons ayant à l'intérieur des entonnoirs une dimension externe se rétrécissant en conséquence.

2. Four avec canal de four, le fond duquel étant traversé par les pistons d'un dispositif de transport effectuant dans la direction du canal un mouvement de va-et-vient et un mouvement de course, le mouvement des pistons produisant le soulèvement, le transport au pas et le déposement des charges de matériel à brûler, de préférence de plaques portantes (10), caractérisé en ce que, dans le fond (4) du canal de four (1) sont disposés des entonnoirs (12') dans lesquels pénètrent les pistons (13), ces entonnoirs étant de dimension à tout juste permettre le mouvement du piston, les pistons étant pourvus, du moins en partie, de collets (55) tournant autour du côté externe des pistons et les entonnoirs, des arcades (58) placées à l'intérieur des entonnoirs, ces arcades étant verticalement décalées par rapport aux collets et les chevauchant horizontalement.

3. Four selon la revendication 2, caractérisé en ce que, du moins une partie des arcades (58) est disposée au côté intérieur des pierres de coffrage (56, 57) placées dans les entonnoirs.

4. Four selon la revendication 3, caractérisé en ce que deux pierres de coffrage identiques (56, 57) sont placées, inversées l'une par rapport à l'autre, dans l'entonnoir (112).

5. Four selon l'une des revendications préalables, caractérisé en ce que l'entonnoir (12' ; 112) a une coupe transversale principalement rectangulaire et que les pistons (13 ; 113) sont principalement parallélépipèdes.

6. Four selon l'une des revendications préalables, caractérisé en ce que des éléments du côté intérieur de l'entonnoir et/ou du piston dans son domaine à l'intérieur de l'entonnoir sont pourvus d'une enduction feutrée (63).

7. Four selon l'une des revendications préalables caractérisé en ce que, à l'intérieur du canal de four, plusieurs rangées de pistons sont disposées parallèlement les unes par rapport aux autres.

8. Four selon l'une des revendications préalables, caractérisé en ce que le piston contient une canalisation de gaz (59) qui débouche à l'intérieur de l'entonnoir (112).

Fig.1

0 007 464

Fig. 2

Fig. 4

**Fig. 3**

**Fig. 5a**

**Fig. 5b**

10

**Fig. 5c**

**Fig. 5d**

0 007 464

Fig.6

~1~

Fig.7

5

Fig. 8